# EUROPEAN PATENT SPECIFICATION

(11) **EP 0 558 546 B1**
(45) Date of publication and mention of the grant of the patent: **27.08.1997**
(21) Application number: 91919972.9
(22) Date of filing: 19.11.1991
(51) Int. Cl.: B67D 5/02, B05B 7/30, A01M 7/00

(54) **CONTAINER SUPPLY CAPS**
VERSORGUNGSKAPPEN FÜR BEHÄLTER
BOUCHONS DISTRIBUTEURS DESTINES A DES RECIPIENTS

(30) Priority: 20.11.1990 GB 9025265
(43) Date of publication of application: 08.09.1993
(73) Proprietor: WISDOM AGRICULTURAL INVESTMENTS LIMITED, Fownhope, Hereford HR1 4NP (GB)
(72) Inventor: GARNETT, Richard, Henry Wisdom Agricultural Ltd., Estate Hereford HR2 6JR (GB)
(74) Representative: Harding, Richard Patrick
(86) International application number: GB9102043
(87) International publication number: WO9208548

(56) References cited:
- EP-A- 0 389 191
- WO-A-89/11219
- US-A- 2 628 850
- US-A- 3 211 178
- US-A- 4 023 718

## Description

This invention relates to a closed chemical transfer device for agricultural chemicals and the like comprising a container having an outlet for containing a quantity of fluid, and a supply cap connected to the outlet so as to permit supply of a fluid from within the container to a supply conduit in a sealed manner when the container is inverted so that the outlet is at its bottom.

There are many applications in which it is required to transfer a substance from a container, in which the substance is supplied, to a supply point of a system in which the substance is to be processed or used, without permitting spillage or contamination of the substance. This may either be because the substances themselves or associated fumes are hazardous to operating personnel, or because the substances, such as foodstuffs, are to be kept free from contamination from the outside.

International Patent Publication No. WO 89/11219 discloses an agricultural sprayer system of a type which includes a reservoir for supplying a dilutant for mixing with a chemical concentrate, and a spray head for spraying a mixture of the dilutant and the concentrate. The concentrate is supplied in a container and requires to be diluted with the dilutant, generally water, prior to use, the container being subsequently rinsed out with dilutant. In order to obviate the hazard to the operator due to possible chemical concentrate spillage on transfer from the container to the sprayer system, the system includes a cap and associated hose for attachment to the outlet of the container to permit supply of concentrate to the system in a sealed manner when the container is inverted so that the outlet is at its bottom.

The known supply cap includes an outlet duct for supply of concentrate from within the container when the container is inverted, a valved inlet duct for the passage of air into the container during supply of concentrate through the outlet duct, and an associated float provided to ensure that, when the container is filled with rinsing solution, the valved inlet duct is closed off by the float when the level of solution reaches the height of the float in the container. However such an arrangement is complicated in construction and does not completely obviate the hazard to the operator due to possible concentrate spillage when the cap is being fitted to the container after removal of the closure with which the container is supplied.

EP 0389191 A1 discloses a device for the pressurised dispensing of beer and other beverages from a container in such a manner as to prevent the beverage in the container from coming into contact with air at any stage until it is dispensed. The beer is contained within a flexible inner bag within the container, and is dispensed through a valved outlet by introducing pressurised gas or air into the space between the inner bag and the outer container by way of a valved inlet, so as to apply pressure to the bag to expel the beverage from the bag through the container outlet. Such a pressurised system relies for its correct operation on the separation of the pressurised gas from the beverage by means of the bag.

It is an object of the invention to provide an improved closed chemical transfer device for agricultural chemicals and the like.

According to the present invention there is provided a closed chemical transfer device for agricultural chemicals and the like comprising a container having an outlet for containing a quantity of fluid, and a supply cap connected to the outlet so as to permit supply of fluid under the action of gravity and without the application of pressure from within the container to a supply conduit in a sealed manner when the container is inverted so that the outlet is at its bottom, the supply cap including a connector body which is sealingly engaged with the outlet, an outlet duct extending through the connector body so as to be in fluid communication with the fluid within the container and provided for the passage of fluid out of the container when the container is inverted, and an inlet duct extending through the connector body so as to be in fluid communication with the fluid within the container and provided for the passage of air and/or rinsing liquid into the container to displace fluid supplied by way of the outlet duct whilst preventing the escape of fluid to atmosphere, characterised in that the supply cap includes coupling means mounted on the connector body for sealingly coupling the outlet duct to the supply conduit such that, when the supply conduit is connected to the coupling means, supply of fluid from the outlet duct to the supply conduit under the action of gravity and without the application of pressure when the container is inverted is permitted, whereas, when the supply conduit is disconnected from the coupling means, the outlet duct is closed off.

In a preferred embodiment of the invention the connector body is provided with closure opening means for providing access through a closure member closing off the outlet when the connector body is engaged with the outlet on connection of the supply cap to the container so as to permit communication of the outlet duct with the inside of the container. In use of such an arrangement there is no need to remove a closure member, such as a membrane seal, with which the container may be supplied, prior to fitting of the supply cap to the outlet. The closure opening means may be constituted by perforating means, such as a cutting edge, or alternatively it may simply comprise a displacing rod for opening a valve constituting the closure member.

In order that the invention may be more fully understood, several forms of device in accordance with the invention will now be described, by way of example, with reference to the accompanying drawings, in which:
Figure 1 is a section through a first supply cap for fitting to a container outlet;
Figure 1A is a section through a first supply cap for fitting to a container outlet;
Figure 2 is a view of the underneath of the first supply cap with a fitting ring and a nozzle part removed;
Figures 3 and 4 are side views of the first supply cap, with the fitting ring removed, taken respectively in the directions of the arrows III and IV in Figure 1; and
Figures 5 and 6 are sections through second and third supply caps fitted to container outlets.

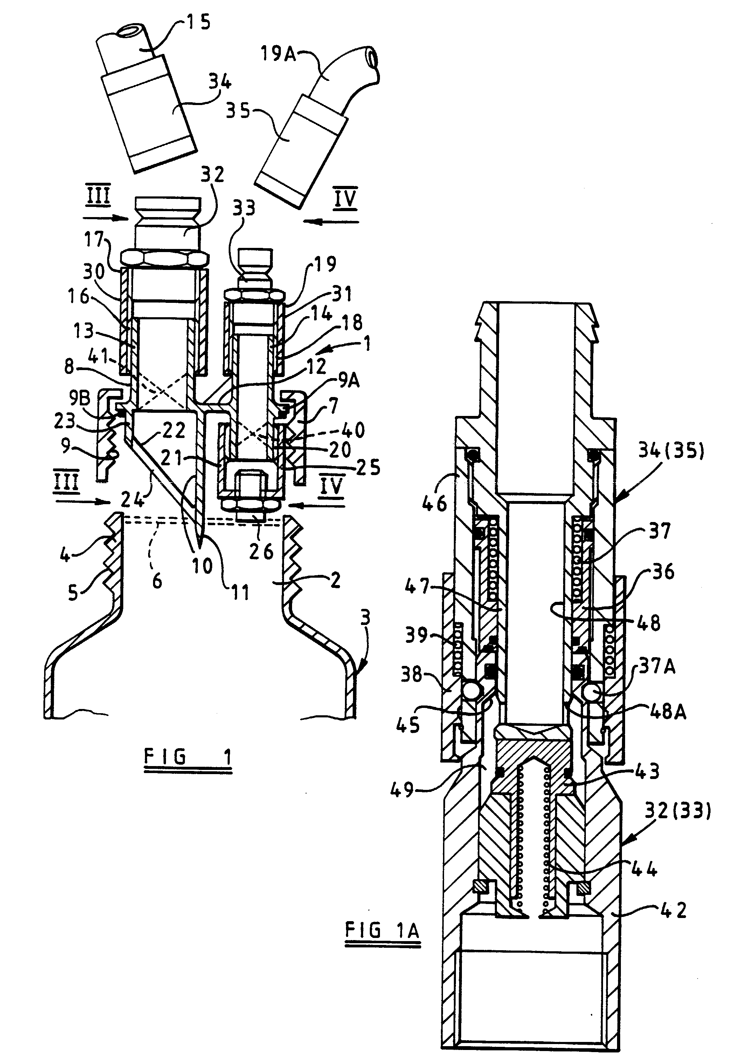

Referring to Figure 1, the supply cap 1 is adapted for fitting to the screwthreaded outlet 2 of a standard plastics container 3 for containing a chemical concentrate which, when diluted, is used for agricultural spraying. The outlet 2 has an upstanding rim 4 having an external screwthread 5 for receiving an internally screwthreaded cap (not shown) for closing off the outlet 2 when the container 3 is supplied to the user. As an additional seal to prevent leakage of the chemical concentrate from the container 3 during storage, a foil membrane 6, shown in broken lines in Figure 1, is secured to the rim 4 about its periphery so as to seal the outlet 2.

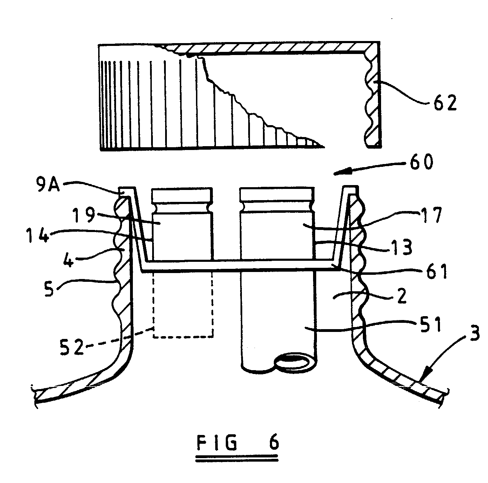

The supply cap 1 is fitted to the outlet 2, after removal of the internally screwthreaded cap, by engaging an internally screwthreaded ring 7 of the supply cap 1 with the rim 4 and by rotating the ring 7 relative to the body 8 of the supply cap 1, so as to engage the internal screwthread 9 of the ring 7 with the external screwthread 5 of the rim 4 and so as to trap a sealing ring 9B between a shoulder 9A on the cap body 8 and the top of the rim 4. During fitting of the supply cap 1 to the outlet 2 a perforating cutting flange 10 having a curved knife edge 11 (as best seen in Figures 3 and 4) integral with the body 8 perforates the foil membrane 6 so as to provide access to the inside of the container 3.

The cap body 8 comprises a circular member 12 defining the shoulder 9A at its periphery and having an outlet duct 13 and an inlet duct 14 extending therethrough and integral therewith. The outlet duct 13 is provided for supply of chemical concentrate from within the container 3 to a supply conduit constituted by a flexible hose 15 when the container 3 is inverted. The outlet duct 13 has an external screwthread 16 externally of the cap for attachment of a dry break coupling part 17 and does not extend internally of the cap beyond the circular member 12. The inlet duct 14 is provided to admit air to the container along an inlet conduit constituted by a flexible hose 19A to displace chemical concentrate discharged through the outlet duct 13 when the container is inverted, and also to admit rinsing liquid to the container after the container has been emptied with a view to flushing out any chemical concentrate still remaining in the container. The inlet duct 14 has an external screwthread 18 externally of the cap for connection of a dry break coupling part 19. Furthermore the inlet duct 14 extends beyond the circular member 12 internally of the cap and is provided with an external screwthread 20 internally of the cap for detachable connection of a nozzle part 21.

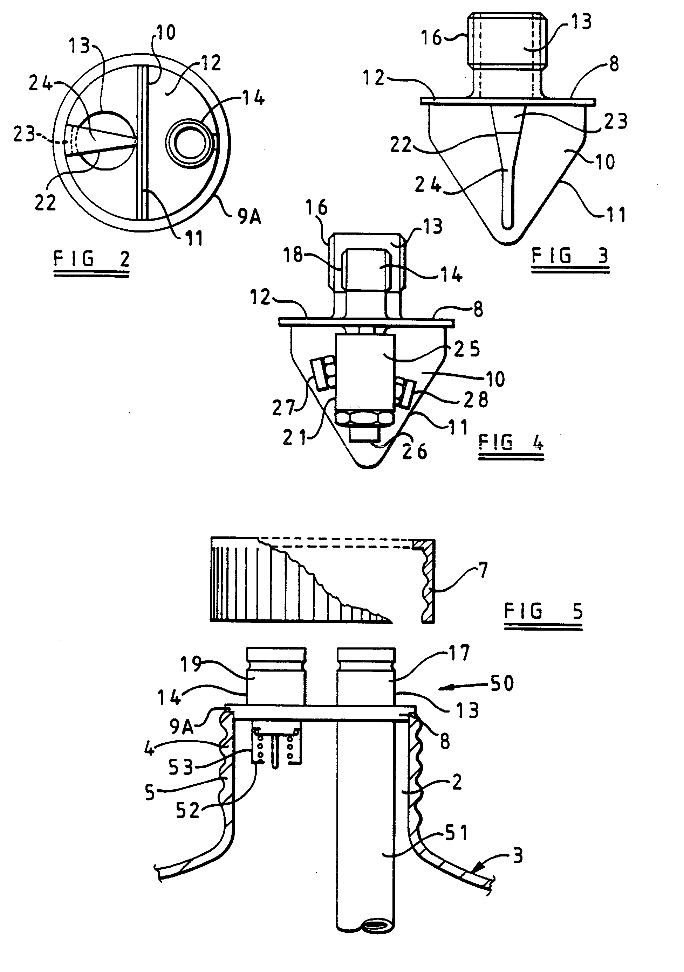

Extending between the circular member 12 and the cutting flange 10 is a strut 22 comprising a portion 23, as best seen in Figure 3, extending perpendicularly to the circular member 12 and an inclined portion 24 which extends across the internal opening of the outlet duct 13, as best seen in Figure 2, but which does not obstruct the opening. As well as providing lateral support to the cutting flange 10, the strut 22 acts to fold the foil membrane 6 out of the way on perforation of this membrane by the cutting flange 10 so that the membrane does not obstruct the outlet duct 13.

The nozzle part 21 comprises an internally screwthreaded sleeve 25 for fitting to the external screwthread 20 of the inlet duct 14, and three replaceable nozzles 26, 27 and 28 (see Figure 4) which extend through screwthreaded apertures in the walls of the sleeve 25. The nozzle 26 extends through the end wall of the sleeve 25 and is adapted to spray rinsing liquid over a conical angle of 90°, whereas the nozzles 27 and 28 extend through the side wall of the sleeve 25 and are inclined at slight angles downwardly and adapted to spray rinsing liquid over a conical angle of 50°. The nozzles are adapted to be unscrewed by a special tool and to be replaced by nozzles having different spray angles, aperture sizes, etc., as may be required for different applications or for metering different cleaning fluids. If required, the complete nozzle part 21 may be removed from the inlet duct 14 and replaced by an alternative nozzle part having different nozzles and/or nozzle arrangements.

It will be appreciated that the ring 7 and the dry break coupling parts 17 and 19 are omitted in Figures 2, 3 and 4, and that the nozzle part 21 is additionally omitted in Figure 2.

Referring to Figure 1, each of the dry break coupling parts 17 and 19 comprises a respective internally screwthreaded sleeve 30 or 31 for fitting to the outlet duct 13 or inlet duct 14 and a respective snap connector part 32 or 33 for detachable connection to a complementary dry break coupling part 34 or 35 provided on the hose 15 or 19A. Each of the dry break couplers formed by the coupling parts 32 and 34 and the coupling parts 33 and 35 is of a known type as will be described briefly with reference to Figure 1A. The male coupling part 32 (or 33) has a body part 42 and a movable valve member 43 which is biased by a spring 44 so that, when disconnected from the female coupling part 34 (or 35), the valve member 43 is biased into engagement with the valve seat 45 formed on the inside of the body part 42 so as to prevent any leakage from the coupling part 32. The female coupling part 34 (or 35) has a body part 46 having an inner tubular part 47 which, when the connection is established with the male coupling part 32 (or 33), serves to displace the valve member 43 of the male coupling part inwardly against spring force so that fluid communication is established between the bore 48 of the tubular part 47 and an annular chamber 49 within the body part 42 by way of apertures 48A, the chamber 49 being in communication with the lower part of the coupler by means of axially extending bores (not shown) extending through the body part 42. The female coupling part also has an inner sealing sleeve 36 biased by a spring 37 such that, when the coupling parts are disconnected, the sleeve 36 closes off the apertures 48A in the tubular part 47 to prevent leakage from the female coupling part. In addition the female coupling part is locked to the male coupling part by a locking ring 37A which is releasable from an annular groove in the body part 42 by movement of an outer sleeve 38 upwardly against the action of a spring 39. The dry break couplers are of different dimensions in order to prevent incorrect connection of the hoses.

The outlet cap 1 is adapted to be used particularly for supplying chemical concentrate from the container 3 to a chemical concentrate metering device as disclosed in International Patent Publication No. WO 89/11219 for introducing a measured quantity of chemical concentrate into an agricultural sprayer system where it is diluted with water to form a spraying solution. In use in such an application, and after fitting of the supply cap 1 to the container outlet 2 in the manner already described, the hoses 15 and 19A are connected to the outlet duct 13 and the inlet duct 14 respectively and the container 3 is inverted, preferably being held in this position on a stand. The metering device is then operated to draw chemical concentrate from inside the container 3 along the hose 15, whilst a 3-way valve to which the hose 19A is connected is placed in a position to permit introduction of ambient or varying pressure air along the hose 19A, along the inlet duct 14 and through the nozzles 26, 27 and 28 into the container 3. The hose 19A is preferably arranged so as to prevent siphoning of concentrate along the hose 19A by way of the inlet duct 14. When the container 3 has been emptied the 3-way valve is moved to a position to permit admission of rinsing liquid or cleaning fluid along the hose 19A and through the inlet duct 14 and the nozzles 26, 27 and 28 into the container, the rinsing liquid subsequently being removed from the container 3 through the outlet duct 13 and the hose 15 if required.

If appropriate for a particular application, the inlet duct may include a non-return valve 40, as shown diagrammatically in broken lines in Figure 1, to permit passage of air and rinsing fluid into the container, but to prevent concentrate from passing through the inlet duct 14 to the hose 19A. Furthermore the outlet duct 13 may be provided with a non-return valve 41, as shown diagrammatically in broken lines in Figure 1, in order to permit passage of concentrate out of the container, but to prevent concentrate from passing along the outlet duct 13 in the opposite direction.

Figures 5 and 6 show two further forms of supply cap 50 and 60 which are not provided with a perforating cutting flange for providing access to the inside of the container 3, but which are instead intended to be ready fitted to the container (or possibly fitted to the container after opening of the container). In Figures 5 and 6 the same parts are given the same reference numerals as in Figures 1 to 4.

Referring to Figure 5, the supply cap 50 has dry break coupling parts 17 and 19 similar to those shown in Figure 1, except that in this case the parts 17 and 19 are integral with the outlet duct 13 and inlet duct 14 respectively which are in turn integral with the cap body 8. The cap body 8 has a peripheral shoulder 9A which rests on the rim 4 of the container outlet 2 and is sealed thereto by sonic welding or by an adhesive. In a variant of the illustrated arrangement the cap body 8 may be an interference fit on the outlet 2 or may even be integrally moulded thereon. Alternatively the shoulder 9A may be secured to the rim 4 by being clamped thereon by an internally screwthreaded ring 7 (shown partially cut-away in Figure 5) which is held on the externally screwthreaded rim 4 with an adhesive interposed therebetween so that it may be removed only with difficulty. The outlet duct 13 is optionally formed with a dip tube 51, and the inlet duct 14 is optionally provided with a non-return valve 52 within a dip tube 53. Where such a non-return valve 52 is provided, the dry break coupling part 19 may be dispensed with if required.

The supply cap 60 of Figure 6 is very similar to the supply cap 50 of Figure 5 except that it has a modified cap body 61 which is so formed as to cause the dry break coupling parts 17 and 19 to be recessed within the outlet rim 4. This permits an internally screwthreaded closure cap 62 (shown partly cut-away in Figure 6) to be fitted to the outlet rim 4 when the container is supplied for use and to be subsequently removed by unscrewing to enable access to be obtained to the coupling parts 17 and 19 of the supply cap 60.

The above described supply caps may be adapted to supply liquid, granular or powder substances. Whilst the cap is designed primarily to protect the operator and the environment from spillage, vapour or dust contamination during the supply of such substances, it can equally as well be used in applications in which a substance to be supplied, such as a food substance, must be protected from contamination by the environment.

## Claims

1. A closed chemical transfer device for agricultural chemicals and the like comprising a container (3) having an outlet (2) for containing a quantity of fluid, and a supply cap (1) connected to the outlet (2) so as to permit supply of fluid under the action of gravity and without the application of pressure from within the container (3) to a supply conduit (15) in a sealed manner when the container is inverted so that the outlet is at its bottom, the supply cap (1) including a connector body (8) which is sealingly engaged with the outlet (2), an outlet duct (13) extending through the connector body (8) so as to be in fluid communication with the fluid within the container (3) and provided for the passage of fluid out of the container (3) when the container is inverted, and an inlet duct (14) extending through the connector body (8) so as to be in fluid communication with the fluid within the container (3) and provided for the passage of air and/or rinsing liquid into the container (3) to displace fluid supplied by way of the outlet duct (13) whilst preventing the escape of fluid to atmosphere, characterised in that the supply cap (1) includes coupling means (17) mounted on the connector body (8) for sealingly coupling the outlet duct (13) to the supply conduit (15) such that, when the supply conduit (15) is connected to the coupling means (17), supply of fluid from the outlet duct (13) to the supply conduit (15) under the action of gravity and without the application of pressure when the container is inverted is permitted, whereas, when the supply conduit (15) is disconnected from the coupling means (17), the outlet duct (13) is closed off.

2. A device according to Claim 1, wherein the connector body (8) is provided with closure opening means (10) for providing access through a closure member (6) closing off the outlet (2) when the connector body (8) is engaged with the outlet (2) on connection of the supply cap (1) to the container (3) so as to permit communication of the outlet duct (13) with the inside of the container (3).

3. A device according to Claim 2, wherein the closure opening means is constituted by a perforating flange (10) on the connector body (8) projecting in a direction such that the flange (10) enters the outlet (2) to perforate the closure member (6) when the supply cap (1) is connected to the container (3).

4. A device according to Claim 1, 2 or 3, wherein an internally screwthreaded ring (7) is provided for sealingly engaging the connector body (8) with the outlet (2) by engaging the internal screwthread of the ring (7) with an external screwthread (5) on the container (3).

5. A device according to Claim 1, wherein the connector body (8, 61) is ready fitted to the outlet (2) of the container (3) when it is supplied filled with a quantity of fluid so that the connector body cannot be removed or so that it is removable only with difficulty.

6. A device according to any preceding claim, wherein the inlet duct (14) is provided with a non-return valve (40, 52) which permits passage of air and/or rinsing liquid into the container (3) but which prevents escape of the fluid within the container through the inlet duct (14).

7. A device according to any preceding claim, wherein further coupling means (19) are mounted on the connector body (8) for sealingly coupling the inlet duct (14) to an air and/or rinsing liquid further conduit (19A) such that, when the further conduit (19A) is connected to the further coupling means (19), supply of air and/or rinsing liquid from the further conduit (19A) to the inlet duct (14) is permitted whereas, when the further conduit (19A) is disconnected from the further coupling means (19), the inlet duct (14) is closed off.

8. A device according to Claim 7, wherein the coupling means (17) and the further coupling means (19) are of different dimensions in order to prevent incorrect connection of the two conduits (15, 19A).

9. A device according to any preceding claim, wherein nozzle means (21) are connected to the inlet duct (14) for distributing rinsing liquid within the container (3) in the form of a spray.

10. A device according to Claim 9, wherein the nozzle means (21) includes a plurality of replaceable nozzles (26, 27, 28) directed at different angles.

## Patentansprüche

1. Geschlossene chemische Transportvorrichtung für landwirtschaftliche Chemikalien und ähnliches, die folgende Komponenten umfaßt: einen Behälter (3) mit einem Auslaß (2) zur Aufnahme einer Menge eines Fluids und eine Zuführungskappe (1), die mit dem Auslaß (2) verbunden ist, um in einer in sich geschlossenen Weise die Zufuhr des Fluids unter der Wirkung der Schwerkraft und ohne die Anwendung von Druck aus dem Behälter (3) zu einer Zuführleitung (15) zu ermöglichen, wenn der Behälter umgedreht wird, so daß sich der Auslaß an dessen Boden befindet, wobei die Zuführungskappe (1) ein Verbindungsstück (8) einschließt, das abdichtend mit dem Auslaß (2) ineinandergreift, wobei ein Auslaßkanal (13) so durch das Verbindungsstück (8) geführt wird, daß dieser mit dem Fluid innerhalb des Behälters (3) in Fluid-Verbindung steht und den Durchgang des Fluids aus dem Behälter (3) ermöglicht, wenn der Behälter umgedreht wird, und wobei ein Einlaßkanal (14) so durch das Verbindungsstück (8) geführt wird, daß dieser mit dem Fluid innerhalb des Behälters (3) in Fluid-Verbindung steht und den Durchgang von Luft und/oder Spülflüssigkeit in den Behälter (3) ermöglicht, um das zugeführte Fluid über den Auslaßkanal (13) zu verdrängen, während der Austritt von Fluid an die Atmosphäre verhindert wird, dadurch gekennzeichnet, daß die Zuführungskappe (1) Kopplungsmittel (17) einschließt, die an dem Verbindungsstück (8) angebracht sind, um den Auslaßkanal (13) abdichtend an die Zuführleitung (15) anzuschließen, so daß dann, wenn die Zuführleitung (15) mit dem Kopplungsmittel (17) verbunden ist, die Zufuhr von Fluid unter der Wirkung der Schwerkraft und ohne die Anwendung von Druck aus dem Auslaßkanal (13) zu der Zuführleitung (15) möglich ist, wenn der Behälter umgedreht wird, während der Auslaßkanal (13) geschlossen ist, wenn die Zuführleitung (15) von dem Kopplungsmittel (17) abgenommen ist.

2. Vorrichtung nach Anspruch 1, bei der das Verbindungsstück (8) mit einem Verschluß-Öffnungsmittel (10) versehen ist, um den Zugang durch ein Verschlußelement (6), das den Auslaß (2) verschließt, zu ermöglichen, wenn sich das Verbindungsstück (8) bei einem Anschluß der Zuführungskappe (1) an den Behälter (3) mit dem Auslaß (2) im Eingriff befindet, um so die Verbindung des Auslaßkanals (13) mit dem Inneren des Behälters (3) zu ermöglichen.

3. Vorrichtung nach Anspruch 2, bei der das Verschluß-Öffnungsmittel durch einen eindringenden Bund (10) am Verbindungsstück (8) gebildet wird, der in eine Richtung vorsteht, derartig, daß der Bund (10) in den Auslaß (2) eintritt, um das Verschlußelement (6) zu durchstechen, wenn die Verschlußkappe (1) mit dem Behälter (3) verbunden ist.

4. Vorrichtung nach Anspruch 1, 2 oder 3, bei der ein mit Innengewinde versehener Ring (7) vorhanden ist, um dadurch abdichtend mit dem Verbindungsstück (8) mit dem Auslaß (2) ineinanderzugreifen, daß das Innengewinde des Rings (7) mit einem Außengewinde (5) am Behälter (3) ineinandergreift.

5. Vorrichtung nach Anspruch 1, bei der das Verbindungsstück (8, 61) einsatzbereit am Auslaß (2) des Behälters (3) angepaßt ist, wenn dieser gefüllt mit einer Menge an Fluid geliefert wird, so daß das Verbindungsstück nicht abgenommen werden kann oder so daß es nur unter Schwierigkeiten abgenommen werden kann.

6. Vorrichtung nach einem der vorhergehenden Ansprüche, bei dem der Einlaßkanal (14) mit einem Rückschlagventil (40, 52) versehen ist, das den Durchgang von Luft und/oder Spülflüssigkeit in den Behälter (3) ermöglicht, den Austritt des Fluids innerhalb des Behälters durch den Einlaßkanal (14) aber verhindert.

7. Vorrichtung nach einem der vorhergehenden Ansprüche, bei dem ein weiteres Kopplungsmittel (19) am Verbindungsstück (8) angebracht ist, um den Einlaßkanal (14) abdichtend mit einer weiteren Luft- und/oder Spülflüssigkeitsleitung (19A) zu verbinden, derartig, daß dann, wenn die weitere Leitung (19A) mit dem weiteren Kopplungsmittel (19) verbunden ist, die Zufuhr von Luft und/oder Spülflüssigkeit aus der weiteren Leitung (19A) zum Einlaßkanal (14) möglich ist, während der Einlaßkanal (14) geschlossen ist, wenn die weitere Leitung (19A) von dem weiteren Kopplungsmittel (19) getrennt ist.

8. Vorrichtung nach Anspruch 7, bei der das Kopplungsmittel (17) und das weitere Kopplungsmittel (19) unterschiedliche Abmessungen haben, um einen fehlerhaften Anschluß der beiden Leitungen (15, 19A) zu verhindern.

9. Vorrichtung nach einem der vorhergehenden Ansprüche, bei der mit dem Einlaßkanal (14) Düsenmittel (21) verbunden sind, um die Spülflüssigkeit innerhalb des Behälters (3) in Form eines Sprühnebels zu verteilen.

10. Vorrichtung nach Anspruch 9, bei der die Düsenmittel (21) eine Vielzahl von austauschbaren Düsen (26, 27, 28) einschließen, die in unterschiedlichen Winkeln ausgerichtet sind.

## Revendications

1. Dispositif de transfert chimique fermé pour des produits chimiques agricoles et des produits similaires, comprenant un récipient (3) avec un orifice de sortie (2), destiné à contenir une certaine quantité de fluide, et un bouchon distributeur (1) connecté à l'orifice de sortie (2), de sorte à permettre l'alimentation du fluide sous l'action de la gravité et sans application de pression de l'intérieur du réservoir (3) vers une conduite d'alimentation (15), de manière étanche, lorsque le récipient est renversé, l'orifice de sortie se trouvant en bas, le bouchon de distribution (1) englobant un corps de raccord (8) engagé de façon étanche dans l'orifice de sortie (2), un conduit de sortie (13) s'étendant à travers le corps de raccord (8), de sorte à être en communication de fluide avec le fluide à l'intérieur du récipient (3) et servant à assurer le passage du fluide sortant du récipient (3) lorsque le récipient est renversé, et un conduit d'entrée (14) s'étendant à travers le corps de raccord (8), de sorte à être en communication de fluide avec le fluide à l'intérieur du récipient (3) et servant à assurer le passage d'air et/ou d'un liquide de rinçage dans le récipient (3), pour déplacer le fluide amené par l'intermédiaire du conduit de sortie (13), tout en empêchant l'échappement du fluide dans l'atmosphère, caractérisé en ce que le bouchon distributeur (1) englobe un moyen d'accouplement (17) monté sur le corps de raccord (8), pour coupler de façon étanche le conduit de sortie (13) à la conduite d'alimentation (15), de sorte que lorsque la conduite d'alimentation (15) est connectée au moyen d'accouplement (17), l'alimentation du fluide du conduit de sortie (13) vers la conduite d'alimentation (15) sous l'action de la gravité et sans application de pression, le récipient étant renversé, est permise, tandis que lorsque la conduite d'alimentation (15) est déconnectée du moyen de raccord (17) le conduit de sortie (13) est fermé.

2. Dispositif selon la revendication 1, dans lequel le corps de raccord (8) comporte un moyen d'ouverture de la fermeture (10) pour permettre l'accès à travers un élément de fermeture (6) fermant l'orifice de sortie (2) lorsque le corps de raccord (8) est engagé dans l'orifice de sortie (2) lors de la connexion du capuchon distributeur (1) au récipient (3), de sorte à permettre la communication du conduit de sortie (13) avec l'intérieur du récipient (3).

3. Dispositif selon la revendication 2, dans lequel le moyen d'ouverture de la fermeture est constitué par une bride de perforation (10) sur le corps de raccord (8), débordant dans une direction, de sorte que la bride (10) rentre dans l'orifice de sortie (2) pour perforer l'élément de fermeture (6) lorsque le capuchon distributeur (1) est connecté au récipient (3).

4. Dispositif selon les revendications 1, 2 ou 3, comportant une bague à filet interne (7), destinée à s'engager de façon étanche dans le corps de raccord (8) et l'orifice de sortie (2), par engagement du filet interne de la bague (7) dans un filet externe (5) sur le récipient (3).

5. Dispositif selon la revendication 1, dans lequel le corps de raccord (8, 61) est complètement ajusté sur l'orifice de sortie (2) du récipient (3) s'il est rempli d'une certaine quantité de fluide amenée, de sorte que le corps de raccord ne peut pas être enlevé ou qu'il ne peut être enlevé que difficilement.

6. Dispositif selon l'une quelconque des revendications précédentes, dans lequel le conduit d'entrée (14) comporte une soupape de retenue (40, 52), permettant le passage de l'air et/ou de liquide de rinçage dans le récipient (3), mais empêchant un échappement du fluide contenu dans le récipient à travers le conduit d'entrée (14).

7. Dispositif selon l'une quelconque des revendications précédentes, comportant un moyen d'accouplement additionnel (19), monté sur le corps de raccord (8) pour coupler de façon étanche le conduit d'entrée (14) à une conduite additionnelle d'air et/ou de liquide de rinçage (19A), de sorte que lorsque la conduite additionnelle (19A) est connectée au moyen d'accouplement additionnel (19), l'alimentation d'air et/ou de liquide de rinçage de la conduite additionnelle (19A) vers le conduit d'entrée (14) est permise, tandis que si la conduite additionnelle (19A) est déconnectée du moyen d'accouplement additionnel (19), le conduit d'entrée (14) est fermé.

8. Dispositif selon la revendication 7, dans lequel le moyen d'accouplement (17) et le moyen d'accouplement additionnel (19) ont des dimensions différentes pour empêcher une connexion incorrecte des deux conduites (15, 19A).

9. Dispositif selon l'une quelconque des revendications précédentes, comprenant des moyens de buse (21) connectés au conduit d'entrée (14) pour distribuer le liquide de rinçage dans le récipient (3) sous forme de spray.

10. Dispositif selon la revendication 9, dans lequel le moyen de buse (21) englobe plusieurs buses remplaçables (26, 27, 28), dirigées à des angles différents.
